# EUROPEAN PATENT APPLICATION

(11) **EP 3 608 083 A1**
(43) Date of publication of application: **12.02.2020**
(21) Application number: 18188568.2
(22) Date of filing: 10.08.2018
(51) Int. Cl.: B29C 64/153, B29C 64/357, B29C 64/314, B22F 3/105

(54) **APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Döhler, Tim, 96269 Großheirath (DE)
(74) Representative: Hafner & Kohl Patent- und Rechtsanwälte Partnerschaft mbB

(57) **Abstract**

Apparatus (1) for additively manufacturing three-dimensional objects (2) by means of successive layerwise selective irradiation and consolidation of layers of a build material (3) which can be consolidated by means of an energy source (4), comprising a build material application unit (9) that is adapted to receive, in particular powdery, build material (3) and adapted to apply at least one build material layer in a build plane (8), wherein a determination device (17) with at least one determination unit (18) connected in advance to the build material application unit (9) with respect to the build material flow direction (20), wherein the determination unit (18) is adapted to determine at least one build material parameter of at least one part of the build material (3) provided to the build material application unit (9).

## Description

The invention relates to an apparatus for additively manufacturing three-dimensional objects by means of successive layerwise selective irradiation and consolidation of layers of a build material which can be consolidated by means of an energy source, which apparatus comprises a build material application unit that is adapted to receive, in particular powdery, build material and adapted to apply at least one build material layer in a build plane.

Apparatuses for additively manufacturing three-dimensional objects are generally known from prior art. Usually, a (powdery) build material is applied that can be (selectively) irradiated via an energy source in that a selective consolidation of the build material is achieved. Further, it is known that several parameters of the build material directly influence the additive manufacturing process, such as the consolidation behavior of the build material. Exemplary parameters are, inter alia, the humidity of the build material and the particle size distribution of the build material. For process quality and object quality it is crucial that the build material used in the additive manufacturing process meets defined quality requirements, e.g. defined via such parameters. For example, it is necessary that the humidity of the build material is within a defined range or below a defined value, respectively, in that the additive manufacturing process can be performed under predefined conditions to meet quality requirements.

To assure that the build material shows mentioned parameters, usually a batch of build material is taken from the additive manufacturing apparatus or the additive manufacturing process, respectively, to be analyzed in an external device, in particular in a laboratory for determining the build material parameters. For taking out or removing build material from the additive manufacturing apparatus, it is necessary to keep the process conditions inside the additive manufacturing apparatus stable, regarding the process atmosphere, for instance. Further, the batch of build material that has been taken from the additive manufacturing apparatus must not come in contact with ambient conditions, as any interactions with another atmosphere other than the process atmosphere inside the additive manufacturing apparatus will change or have an impact on the build material parameters of the batch of build material that has been taken from the additive manufacturing apparatus. In other words, it is cumbersome to assure that the parameters determined from the batch of build material correctly represent the build material used in the additive manufacturing apparatus.

Hence, the analysis of the build material is time consuming and cumbersome, as build material or a certain amount of build material has to be removed from the additive manufacturing process, wherein the atmosphere in the additive manufacturing process, as well as the atmosphere around the taken batch of build material has to be kept stable. Further, the taken part of the build material has to be moved to an external determination device and the results have to be transmitted back to the additive manufacturing apparatus or an operator of the additive manufacturing process, respectively.

It is an object of the present invention to provide an improved apparatus for additively manufacturing three-dimensional objects, wherein in particular the quality of a determination of build material parameters is improved and the effort for determining build material parameters is reduced.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the apparatus comprises a build material application unit that is adapted to receive build material and apply the build material layerwise in a build plane, for example inside a process chamber of the apparatus. The invention is based on the idea that the apparatus comprises a determination device with at least one determination unit connected in advance to the build material application unit with respect to the build material flow direction, wherein the determination unit is adapted to determine at least one build material parameter of at least one part of the build material provided to the build material application unit.

According to the invention, the apparatus comprises a determination device with at least one determination unit that is adapted to determine at least one build material parameter before the build material is provided to the build material application unit. Hence, it is possible to check the quality of the build material that is provided to the build material application unit before the build material is processed, in particular before the build material is applied on a build plane to be irradiated. The determination device, in particular the determination unit of the determination device, may be integrated into the apparatus, for example arranged inside a housing structure of the apparatus. Preferably the determination unit is also integrated into or (directly) connected with the process atmosphere under which the additive manufacturing process is performed on the apparatus. In other words, it is possible to determine the build material under the same conditions under which the additive manufacturing process is performed.

The determination unit therefore, is arranged in advance to the build material application unit with respect to the build material flow direction of the build material. The term "build material flow direction" refers to the direction in which the build material is processed in the additive manufacturing process or in the additive manufacturing apparatus, respectively. In other words, the build material flow direction defines along which path or following which sequence the build material is processed in different components or functional groups of the apparatus, for instance.

For example, it is possible to pre-process the build material in a sieving unit and to provide the build material afterwards to the build material application unit which applies build material onto the build plane. The build material may further be used after the additive manufacturing process is finished, in particular non-consolidated build material, which can be re-used in that the non-consolidated build material is again provided to the sieving unit. In this example, the sieving unit is defined as "upstream" to the build material application unit, as the build material flow direction runs from the sieving unit to the build material application unit, for instance. Hence, the build material application unit being arranged "downstream" defines that the build material is (at least partially) processed via the determination device, in particular the determination unit, before the build material is provided to the build material application unit.

Therefore, it is not necessary that a part of the build material is removed from the apparatus to be externally analyzed, in particular to determine the at least one build material parameter externally. But the determination of the at least one build material parameter can be performed via the determination device comprised by the apparatus. Hence, the determination unit that may be directly integrated into the apparatus can be used to determine the build material parameter, wherein the build material that is used to determine the build material parameter does not have to be removed from the process atmosphere present in the additive manufacturing process.

Hence, environmental effects that might have a (negative, falsifying) impact on the build material that is to be tested can be avoided. Further, the determination process can be performed "in-line", i.e. inside the additive manufacturing apparatus, wherein the results of the determination can be achieved faster and with less effort, as the build material does not have to be removed from the apparatus and the determination process may be performed in the apparatus itself. Further, it is possible that the determination of the at least one build material parameter may be performed in situ or during the additive manufacturing process, respectively.

The term application unit in the scope of this application may relate to any arbitrary unit or mode of supplying build material to the additive manufacturing process. In particular, the application unit may be a mobile dose unit that can be connected to a process chamber of the apparatus to provide build material. In this case, build material can be provided to the determination unit before it is provided to a dose plane or the build plane, for instance. The application unit may further be moveable relative to the build plane, for example integrated in a "writing head" together with other units of the apparatus, such as an irradiation unit and/or a stream generating unit. In all embodiments, build material can be analyzed in that the build material parameter(s) of the build material can be determined before the build material is provided to the manufacturing process. According to a preferred embodiment of the inventive apparatus, a closed loop transportation path along which at least one part of the build material that has been used in an additive manufacturing process is fed back to the build material application unit, wherein the determination unit is adapted to determine the at least one build material parameter of the at least one part of the build material before the at least one part of the build material is fed into the build material application unit. Thus, the transportation path along which the build material is transported or moved throughout the apparatus can be built as closed loop or can be arranged as closed loop. In other words, build material that is used in the additive manufacturing process can (at least partially) be re-used in another additive manufacturing process. For example, non-consolidated build material can be removed from the process chamber after an additive manufacturing process is finished. The removed non-consolidated build material can be post-processed, for example sieved to separate build material particle conglomerates or oversized build material particles before the build material is used in another additive manufacturing process.

Before the post-processed (or pre-processed) build material is fed back into or again provided to the build material application unit, the determination unit can be used to determine the at least one build material parameter. Hence, it can be assured that predefined build material parameters are met, for example that the humidity in the build material or the build material particle size or build material particle size distribution matches the requirements. Thus, it is assured that the post-processing (or pre-processing), for instance the sieving process, works properly in that the desired results of the post-processing (or pre-processing) are properly achieved. Of course, the term post-processing or pre-processing can be used equivalently, as a matter of point of view the build material is pre-processed before it is provided to another additive manufacturing process or the build material is post-processed after an additive manufacturing process is finished. According to this embodiment, in particular by providing the closed loop transportation path, it is possible that the apparatus determines the build material parameter in-line, wherein the determination unit enables an "in-line build material lab", as build material does not have to be removed from the apparatus to determine the build material parameter, but the build material can be determined or analyzed via the apparatus itself, in particular via the determination device of the apparatus.

The inventive apparatus may be further improved in that a sieving unit is provided that is connected downstream with respect to the build material flow direction to a build unit of the apparatus, in which build unit the additive manufacturing process is performed. Hence, the term "build unit" may refer to any unit of the apparatus in which the additive manufacturing process is performed, i.e. in which build material is irradiated and consolidated. As described before, the build material flow direction defines the direction in which the build material is moved through the apparatus, wherein according to this embodiment, the build material is removed from the build unit and transported to the sieving unit, as the sieving unit is connected downstream of the build unit with respect to the build material flow direction. Thus, it is possible that build material that has been removed from the build unit, for example non-consolidated build material that has to be re-used after an additive manufacturing process, can be removed from the build unit of the apparatus and provided to the sieving unit. The sieving unit may separate build material particles or residues from the non-consolidated build material particles that can be re-used in another additive manufacturing process.

Further, it is possible to provide a blending unit that is adapted to blend fresh build material provided to the apparatus with at least one part of the build material that has been used in an additive manufacturing process, in particular sieved build material. Hence, it is possible to provide an arbitrary amount of fresh build material to the apparatus, for example equaling the amount of build material that is separated from the additive manufacturing process via the sieving unit. The blending unit is in particular adapted to blend the fresh build material with build material that is to be re-used in the apparatus, for example build material that has been sieved via the sieving unit at least one time. In this case, it is either possible to have the determination unit only determine the build material parameter of build material that has been (is to be) re-used in the additive manufacturing process, wherein it is also possible (and preferred) to determine the at least one build material parameter of the blend that has been generated via the blending unit.

In this case, it is possible to determine the build material parameter of the build material that is to be provided to the build material application unit. Hence, it can be assured that the build material that is provided to the process, in particular provided to the build material application unit, can be analyzed, in particular the build material parameter of the build material provided to the build material application unit can be determined before the build material is applied on the build plane.

According to another preferred embodiment of the inventive apparatus, at least one build material storage unit may be provided, wherein a build material storage unit may be arranged in advance to the build material application unit and/or in advance to a sieving unit and/or in advance to the determination unit and/or in advance to a blending unit. Hence, one or a plurality of build material storage units may be provided that can be arranged in different locations or positions in the apparatus, in particular along the build material transportation path along which the build material is transported throughout the additive manufacturing apparatus. For example, the or a build material storage unit may be arranged in advance to the build material application unit. Hence, the build material storage unit may be connected downstream to a sieving unit and upstream to the build material application unit, for example upstream to the determination unit which is again upstream with respect to the build material application unit.

It is also possible to have another or the build material storage unit arranged in advance to a sieving unit, for example to store the build material that is removed from the build unit after an additive manufacturing process is finished. It is also possible to have multiple build material storage units, for example a first build material storage unit in advance to a sieving unit and another build material storage unit downstream of the sieving unit. The same applies with respect to the arrangement of the blending unit, wherein the build material storage unit may be arranged upstream or downstream of the blending unit, wherein it is, of course, also possible to have a first build material storage unit arranged upstream and a second build material storage unit connected downstream of the blending unit. Self-evidently, it is possible to have an arbitrary number of build material storage units dependent on the amount of build material that has to be stored in the specific location along the build material transportation path.

Independent of the individual position or location of the build material storage unit, it is possible to determine the at least one build material parameter of the build material that is to be stored in the build material storage unit, i.e. before the build material is stored in the build material storage unit, or it is possible to determine the build material parameter of the build material that is removed from the build material storage unit before it is provided to the build material application unit.

It is also possible that the determination device comprises more than one determination unit, in particular an additional determination unit arranged in succession to a build unit and/or in advance to a sieving unit. Preferably, it is possible to have two determination units, wherein one determination unit is arranged downstream of the sieving unit, for example to determine the at least one build material parameter after the sieving process is finished. Via the additional determination unit it is possible to determine the build material parameter of the build material that has been removed from the build unit, for example non-consolidated build material that is removed after the additive manufacturing process is finished. Thereby, it is possible to determine the at least one build material parameter of the build material that is provided to the sieving unit, wherein via the combination of the two build material determination units it is possible to verify the effect of the sieving unit on the build material, as the build material parameter of the build material can be determined before and after the sieving process is performed.

The inventive apparatus may further be improved in that the blending unit is adapted to blend fresh build material dependent on a build material parameter determined via the additional determination unit. Hence, it is possible to use the build material parameter determined via the additional determination unit, e.g. arranged downstream of a sieving unit or downstream of a build chamber, and to adjust the amount and/or the type of build material that is blended via the blending unit. Thus, dependent on the parameters of the build material that is recycled from a previous manufacturing process, the type and amount of build material can be determined that has to be added to the process.

According to another embodiment, the determination device may be adapted to adjust the sieving unit dependent on a build material parameter determined via the determination unit and/or the additional determination unit. Thus, dependent on the parameters of the build material that is removed from an additive manufacturing process, e.g. non-consolidated build material, the sieving unit may be adjusted to improve the sieving process.

The inventive apparatus may further be improved in that a data storage unit can be provided that is adapted to receive and store the at least one determined build material parameter. According to this embodiment, it is possible to store the at least one determined build material parameter, for example for quality management purposes. The data storage may for example be built as or comprise one or multiple hard drives or other media on which data, in particular the build material parameter that has been determined, can be stored. Of course, it is also possible to read the stored data from the data storage unit, in particular to read the stored build material parameter that has been determined via the determination device.

The data storage may further be adapted to generate and/or store a relation between the additive manufacturing process and the build material parameter of the build material that is used in the additive manufacturing process. Therefore, it is possible to establish a direct relation between the additive manufacturing process and the build material that is used in that specific process. Thus, it is possible to assure that quality requirements have been met regarding the build material quality during the additive manufacturing process, as the build material parameter of the build material that was used in the additive manufacturing process can be stored and related to the specific additive manufacturing process. Thus, deviations of the build material parameter, for example with respect to a nominal build material parameter, can be identified, wherein additive manufacturing processes or additive manufacturing process steps can be related to the different conditions of build material that have been determined to be present during the execution of the corresponding process or process steps. For example, an identified deviation of a build material parameter may indicate that an analysis of the additive manufactured object is deemed necessary. Due to the relation between the build material parameter and the additive manufacturing process it is possible to identify which part of a three-dimensional object was built with which build material.

The at least one build material parameter may be or may relate to a particle size of the build material and/or a particle size distribution of the build material and/or a particle shape and/or a type of build material and/or a humidity content of the build material and/or an oxygen content of the build material and/or a flowability of the build material. In general, every chemical, physical and mechanical property of the build material can be deemed as build material parameter or as comprised in the build material parameter, wherein it is possible to have a suitable determination unit that can determine the build material parameter of the build material used in the additive manufacturing process. Dependent on the at least one build material parameter or the different build material parameters that are determined, it is possible to verify that the build material is suitable for specific additive manufacturing processes. For example, if for a specific additive manufacturing process one or more build material parameters have to be met, it is possible to verify that the build material that is to be used in the additive manufacturing process fulfills those requirements (in advance to and during the additive manufacturing process). For example, an arbitrary limit or a range in which a specific build material parameter is deemed to be suitable for the additive manufacturing process may be defined. For example, it is possible to define a maximum humidity content in the build material to assure that the additive manufacturing process can be performed under suitable conditions. Further, it is possible to verify that a correct blend is provided via the blending unit or to adjust the amount of fresh build material and/or the type of build material that is blended via the blending unit based on the determined build material parameter.

Dependent on the at least one build material parameter the determination unit has to determine, different analysis technologies may be implemented in the determination unit or the determination device, respectively. Of course, the determination device may comprise several determination units, wherein each determination unit is adapted to determine a different build material parameter. Alternatively, it is also possible to have a determination unit that is adapted to determine more than one build material parameter, for example all build material parameters that have to be determined. Inter alia, the determination unit may be adapted to determine the at least one build material parameter via laser diffraction and/or dynamic image analysis and/or a hall flow meter and/or Raman spectroscopy and/or calcium hydride method.

In particular, it is possible to determine the particle size and/or the particle size distribution via laser diffraction. The particle size distribution and the particle size of the build material may also be determined via dynamic image analysis, wherein the particle shape may also be determined via dynamic image analysis. For determining the humidity content of the build material it is possible to implement a calcium hydride method in the determination unit. Regarding the flowability of the build material, it is possible to have a hall flow meter comprised in the determination unit. Additionally, the oxygen content of the build material may be determined via Raman spectroscopy, for instance.

Preferably, a dispersing unit may be provided which is adapted to disperse the at least one part of the build material and to provide dispersed build material to the determination unit. The dispersing unit may be adapted to disperse the part of the build material that is taken away from the entire volume of build material present in the additive manufacturing apparatus. By dispersing the part of the build material that is to be analyzed or on which the determination unit is to be performing the determination process, the determination process can be enhanced, as the resolution in the determination process can be improved, in particular it is possible to make the individual build material particles visible.

The determination unit may be arranged in the build material transportation path in that the whole build material that is moved along the transportation path passes the determination unit. In other words, it is possible to arrange the determination unit "in-line" with the build material transportation path, wherein it is possible to perform a complete determination of the build material (of 100% of the build material) used in the additive manufacturing process. Alternatively, it is also possible to arrange the determination unit in parallel to the build material transportation path and guide only a predetermined part of the build material through the determination unit. In other words, only a (minor) part of the build material used in the additive manufacturing process runs through the determination process. In this case, the determination process can be performed faster, as only a minor (representative) amount of build material has to be analyzed.

Besides, the invention relates to a determination device for an apparatus, in particular an inventive apparatus, as described before, wherein the determination device comprises at least one determination unit connected in advance to the build material application unit of the apparatus with respect to the build material flow direction, wherein the determination unit is adapted to determine at least one build material parameter of at least one part of the build material provided to the build material application unit.

Further, the invention relates to a method for operating at least one apparatus for additively manufacturing three-dimensional objects by means of successive layerwise selective irradiation and consolidation of layers of a build material which can be consolidated by means of an energy source, which apparatus comprises a build material application unit for applying at least one layer of build material in a build plane, in particular an inventive apparatus, as described before, wherein a determination device with at least one determination unit is connected in advance to the build material application unit of the apparatus with respect to the build material flow direction, wherein at least one build material parameter of at least one part of the build material provided to the build material application unit is determined via the determination device.

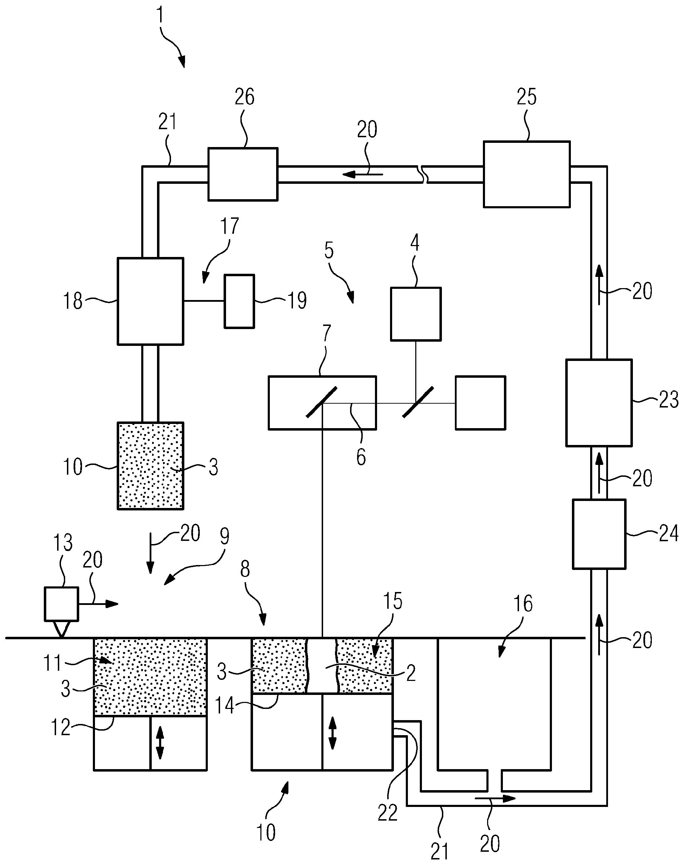

Exemplary embodiments of the invention are described with reference to the Fig. The sole Fig. is a schematic diagram showing an inventive apparatus.

The Fig. shows an apparatus 1 for additively manufacturing three-dimensional objects 2 by means of successive layerwise selective irradiation and consolidation of layers of a build material 3 which can be consolidated by means of an energy source 4 which is adapted to generate an energy beam 6, for example a laser source or an electron source, generating a laser beam or an electron beam, respectively. The energy source 4 is part of an irradiation device 5 also comprising a beam guiding unit 7, in that the irradiation device 5 is adapted to generate the energy beam 6 and guide the energy beam 6 across a build plane 8 in which build material 3 can applied to be irradiated via the energy beam 6.

In this exemplary embodiment of the apparatus 1, the apparatus 1 comprises a build material application unit 9 that comprises a dose unit 10 that is adapted to dose and provide fresh build material 3 to the additive manufacturing process. The dose unit 10 therefore, is adapted to fill fresh build material 3 into a dose chamber 11, wherein the volume of build material 3 received within the dose chamber 11 can be moved upwards via a dose plate 12. Build material 3 provided via the dose chamber 11 and the dose plate 12 can be picked up and conveyed via an application element 13 that is adapted to move the build material 3 to the build plane 8. In other words, the application element 13 is used to convey the build material 3 that is provided via the dose chamber 11 and used to layerwise apply the build material 3 in the build plane 8.

After the build material 3 that is arranged in the build plane 8 has been irradiated via the energy beam 6, a build plate 14 can be lowered to allow for a fresh layer of build material 3 to be applied in the build plane 8, as described before. Thus, the object 2 can successively and layerwise be built in a build chamber of a build unit 15. Surplus build material 3 that is not received in the build plane 8 can be received in an overflow chamber 16.

The apparatus 1 further comprises a determination device 17 with a determination unit 18 and a control unit 19. As can be derived from the Fig., the determination unit 18 is connected in advance to the build material application unit 9 with respect to a build material flow direction 20. The determination unit 18 is adapted to determine build material parameters of the build material 3 before the build material 3 is provided to the dose unit 10 of the build material application unit 9. In other words, it is possible to determine the build material parameters of the build material 3 before the build material 3 is applied in the build plane 8. A respective build material parameter may be a build material particle shape and/or a build material particle size and/or a build material particle distribution and/or a humidity content in the build material 3 and/or an oxygen content in the build material 3 and/or a flowability of the build material 3.

The control unit 19 is adapted to store the determined build material parameter(s), for example in a data storage, such as a hard drive. The control unit 19 may further establish a relation between the additive manufacturing process and the build material parameter of the build material 3 determined via the determination unit 18. In this exemplary embodiment, the determination unit 18 is arranged "in line" with a build material transportation path 21, in other words in-line in build material flow direction 20. Thus, it is possible to determine the build material parameter of the entire build material 3 that is provided to the build material application unit 9 before the build material 3 is applied in the build plane 8. Of course, it is also possible to arrange the determination unit 18 in parallel to the build material transportation path 21 and to have only a (minor) part of the build material 3 transported along the build material transportation path 21 being provided to the determination unit 18 for determining the at least one build material parameter.

The build material flow direction 20 defines the direction of the flow of the build material 3 in the additive manufacturing apparatus 1 or in the additive manufacturing process, respectively. For example, build material 3 is provided to the dose chamber 11 via the dose unit 10 and subsequently is conveyed via the application unit 13 in build material flow direction 20 to the build plane 8. In this exemplary embodiment, it is possible to lower the build plate 14 after every layer of build material 3 that has been applied and irradiated in the build plane 8. After the additive manufacturing process is finished non-consolidated build material 3 can be removed from the build unit 15, for example via an exhaust 22 or any other arbitrary way of removing build material 3 from the build unit 15, for example via a suction lance (not shown). Subsequently, the non-consolidated build material 3 may be guided along the build material transportation path 21 in a build material flow direction 20, for example together with the surplus build material 3 that is received in the overflow chamber 16.

The non-consolidated build material 3 can be provided to a sieving unit 23 arranged "downstream" along the build material transportation path 21. Optionally, an additional build material determination unit 24 can be provided for determining the build material parameter or the build material parameters of the non-consolidated build material 3 that has been removed from the additive manufacturing process before the build material 3 is provided to the sieving unit 23. In other words, the additional build material determination unit 24 may be arranged downstream to the build unit 15 and the overflow chamber 16 and upstream of the sieving unit 23.

Further, the apparatus 1 may optionally comprise a build material storage unit 25, such as a silo, for storing build material 3. Generally, the arrangement of the build material storage unit 25 is arbitrary, wherein in this exemplary embodiment the build material storage unit 25 is arranged downstream of the sieving unit 23 in that sieved build material 3 can be received within the build material storage unit 25 in advance to the next additive manufacturing process or in advance to the next refilling of the dose unit 10 or the dose chamber 11. In other words, build material 3 can be moved from the build material storage unit 25 (or directly from the sieving unit 23) to the dose unit 10, wherein the build material 3 passes the determination unit 18 and the at least one build material parameter can be determined via the determination unit 18. Hence, the build material transportation path 21 forms a closed loop along which the build material 3 can be transported in build material flow direction 20.

The apparatus 1 further comprises a blending unit 26 that is adapted to blend fresh build material 3 into the build material cycle that is used in the additive manufacturing apparatus 1. In this exemplary embodiment the blending unit 26 is arranged upstream of the determination unit 18 in that the build material 3 that has been blended to the build material transportation path 21 via the blending unit 26 is analyzed via the determination unit 18 before it is provided to the build material application unit 9.

As can further be derived from the Fig., the analysis of the build material 3 can be performed "in-line" during the additive manufacturing process. It is not necessary to remove build material 3 from the build material transportation path 21 to determine a build material parameter. Instead, all build material parameters can be determined via the determination unit 18 inside (a housing structure of) the apparatus 1. Of course, it is also possible to have different components or modules of the apparatus 1 arranged externally to the housing of the apparatus 1, such as the sieving unit 23, the build material storage unit 25 and the blending unit 26, for instance. Independent of whether the several units are arranged internal or external to the housing of the apparatus 1, the closed loop formed via the build material transportation path 21 allows for determining the build material 3, in particular the build material parameter of the build material 3, under the same process conditions that are present inside the process chamber, for example inside the build unit 15. Hence, the analysis of build material 3 does not require build material 3 to be removed from the build material transportation path 21.

Of course, the inventive method may be performed on the inventive apparatus 1, preferably using an inventive determination device 17.

## Claims

1. Apparatus (1) for additively manufacturing three-dimensional objects (2) by means of successive layerwise selective irradiation and consolidation of layers of a build material (3) which can be consolidated by means of an energy source (4), comprising a build material application unit (9) that is adapted to receive, in particular powdery, build material (3) and adapted to apply at least one build material layer in a build plane (8), **characterized by** a determination device (17) with at least one determination unit (18) connected in advance to the build material application unit (9) with respect to the build material flow direction (20), wherein the determination unit (18) is adapted to determine at least one build material parameter of at least one part of the build material (3) provided to the build material application unit (9).

2. Apparatus according to claim 1, **characterized by** a closed loop build material transportation path (21) along which at least one part of the build material (3) used in an additive manufacturing process is fed back to the build material application unit (9), wherein the determination unit (18) is adapted to determine the at least one build material parameter of the at least one part of the build material (3) before the at least one part of the build material (3) is fed into the build material application unit (9).

3. Apparatus according to claim 1 or 2, **characterized by** a sieving unit (23) that is connected downstream with respect to the build material flow direction (20) to a build unit (15) of the apparatus (1), in which build unit (15) the additive manufacturing process is performed.

4. Apparatus according to claim 2 or 3, **characterized by** a blending unit (26) that is adapted to blend fresh build material (3) provided to the apparatus (1) with at least one part of the build material (3) used in the additive manufacturing process, in particular sieved build material (3).

5. Apparatus according to one of the preceding claims, **characterized by** at least one build material storage unit (25), wherein a build material storage unit (25) is arranged in advance to the build material application unit (9) and/or in advance to a sieving unit (23) and/or in advance to the determination unit (18) and/or in advance to a blending unit (26).

6. Apparatus according to one of the preceding claims, **characterized in that** the determination device (17) comprises an additional determination unit (24) arranged in succession to a build unit (15) and/or in advance to a sieving unit (23).

7. Apparatus according to claim 6, **characterized in that** the blending unit (26) is adapted to blend fresh build material (3) dependent on a build material parameter determined via the additional determination unit (24).

8. Apparatus according to claim 6 or 7, **characterized in that** the determination device (17) is adapted to adjust the sieving unit (23) dependent on a build material parameter determined via the determination unit (18) and/or the additional determination unit (24).

9. Apparatus according to one of the preceding claims, **characterized by** a data storage unit that is adapted to receive and store the at least one determined build material parameter.

10. Apparatus according to claim 7, **characterized in that** the data storage unit is adapted to generate and/or store a relation between the additive manufacturing process and the build material parameter of the build material (3) that is used in the additive manufacturing process.

11. Apparatus according to one of the preceding claims, **characterized in that** the at least one build material parameter is or relates to
- a particle size of the build material (3) and/or
- a particle size distribution of the build material (3) and/or
- a particle shape and/or
- a type of build material (3) and/or
- a humidity content of the build material (3) and/or
- an oxygen content of the build material (3) and/or
- a flowability of the build material (3).

12. Apparatus according to one of the preceding claims, **characterized in that** the determination unit (18) is adapted to determine the at least one build material parameter via laser diffraction and/or dynamic image analysis and/or a hall flow meter and/or Raman spectroscopy and/or calcium hydride method.

13. Apparatus according to one of the preceding claims, **characterized by** a dispersing unit that is adapted to disperse the at least one part of the build material (3) and to provide dispersed build material (3) to the determination unit (18).

14. Determination device (17) for an apparatus (1), in particular an apparatus (1) according to one of the preceding claims, **characterized in that** the determination device (17) comprises at least one determination unit (18) connected in advance to the build material application unit (9) with respect to the build material flow direction (20), wherein the determination unit (18) is adapted to determine at least one build material parameter of at least one part of the build material (3) provided to the build material application unit (9).

15. Method for operating at least one apparatus (1) for additively manufacturing three-dimensional objects (2) by means of successive layerwise selective irradiation and consolidation of layers of a build material (3) which can be consolidated by means of an energy source (4), which apparatus (1) comprises a build material application unit (9) for applying at least one layer of build material (3) in a build plane (8), **characterized by** a determination device (17) with at least one determination unit (18), which determination device (17) is connected in advance to a build material application unit (9) of the apparatus (1) with respect to the build material flow direction (20) and by determining at least one build material parameter of at least one part of the build material (3) provided to the build material application unit (9) via the determination device (17).
